# EUROPEAN PATENT APPLICATION

(11) **EP 4 328 094 A1**
(43) Date of publication of application: **28.02.2024**
(21) Application number: 22917628.4
(22) Date of filing: 31.10.2022
(51) Int. Cl.: B60R 16/023

(54) **VEHICLE BODY SERVICE CALLING METHOD AND APPARATUS**

(30) Priority: 13.07.2022 CN 202210824979
(71) Applicant: Voyah Automobile Technology Company Ltd., Hanyang District Wuhan City, Hubei 430050 (CN)
(72) Inventor: The designation of the inventor has not yet been filed
(74) Representative: Sach, Greg Robert
(86) International application number: PCT/CN2022/128804
(87) International publication number: WO 2024/011784

(57) **Abstract**

This disclosure discloses a method and a device for invoking a body service for a vehicle, which relate to the technical field of automobiles. This disclosure determines the request source of the invoke request after the invoke request for the body service for a vehicle is received. If the request source of the invoke request is excluded from the preset request source list, which represents that the invoke request comes from the third-party application software, thus it is necessary to consider whether the safety of the vehicle will be affected by executing the body service; and then the request value of the invoke request is obtained. If the request value of the invoke request is the first target value, it represents that the safety of the vehicle will not be affected after the third-party application software invokes the body service, thus the body service can be executed. In this way, the third-party application software may be allowed to invoke the body service on the premise of ensuring the safety of the vehicle, thereby application scenarios for the body service for the vehicle are broadened.

## Description

### CROSS-REFERENCE TO RELATED APPLICATIONS

This application claims a priority of a Chinese patent application No. 202210824979.9, filed on July 13, 2022, and entitled "Method and Device for invoking body service for vehicle", the disclosure of which is hereby incorporated by reference in its entirety.

### TECHNICAL FIELD

The present disclosure relates to a technical field of automobiles, in particular to a method and device for invoking a body service for a vehicle.

### BACKGROUND

The software-defined automobiles promote changes in the automobile industry, and more and more third-party developers are participating in the development of an automobile application software. After the automobile is equipped with a third-party application software, when the third-party application software invokes a body service for the vehicle, a normal driving of the vehicle may be interfered, resulting in a danger to the vehicle. The safety of the vehicle can be completely ensured by not granting any invoking authority of the body service to any third-party application software, but application scenarios of the body service will be greatly limited, and the software-defined automobiles will be limited with no room for development, and a performance of the vehicle entertainment and experience will be greatly discounted. Therefore, how to improve the application scenarios of body services on the premise of ensuring the safety of the vehicle is an urgent problem in the automotive industry.

### SUMMARY

The present disclosure provides a method and device for invoking a body service for a vehicle, and solves the technical problem on how to broaden application scenarios of the body service for the vehicle on the premise of ensuring a safety of a vehicle by utilizing one or more embodiments of the present disclosure.

In a first aspect of the present disclosure, a method for invoking a body service for a vehicle is provided, including: determining a request source of an invoke request after the invoke request for the body service for the vehicle is received; obtaining a request value of the invoke request if the request source of the invoke request is excluded from a preset request source list; and executing the body service based on the invoke request if the request value of the invoke request is a first target value.

In a second aspect of the present disclosure, a device for invoking a body service for a vehicle is provided, including: a request source determination module, configured to determine a request source of an invoke request after the invoke request for the body service for the vehicle is received; a request value obtaining module, configured to obtain a request value of the invoke request if the request source of the invoke request is excluded from a preset request source list; and a body service execution module, configured to execute the body service based on the invoke request if the request value of the invoke request is a first target value.

In a third aspect of the present disclosure, an electronic equipment is provided, including a memory, a processor, and a computer program stored in the memory and operable on the processor. The processor, when executing the computer program, implements any method for invoking the body service for the vehicle described above.

In a fourth aspect of the present disclosure, a computer-readable storage medium is provided. The computer-readable storage medium is stored with a computer program, and the computer program, when executed by the processor, implements any of the above-mentioned methods for invoking the body service for the vehicle.

### BRIEF DESCRIPTION OF DRAWINGS

FIG. 1 shows a flowchart of a method for invoking a body service for a vehicle according to some embodiments of the present disclosure.
FIG. 2 shows another flowchart of the method for invoking the body service for the vehicle according to some embodiments of the present disclosure.
FIG. 3 shows a schematic structural diagram of a device for invoking a body service for a vehicle according to some embodiments of the present disclosure.
FIG. 4 shows a schematic structural diagram of an electronic equipment according to some embodiments of the present disclosure.

### DESCRIPTION OF EMBODIMENTS

The present disclosure provides a method and device for invoking a body service for a vehicle, and solves the technical problem on how to broaden application scenarios of the body for the vehicle on the premise of ensuring a safety of the vehicle by utilizing one or more embodiments of the present disclosure.

For a better comprehension on technical solutions of the present disclosure, the technical solutions of the present disclosure will be described in detail below in conjunction with the accompanying drawings and embodiments.

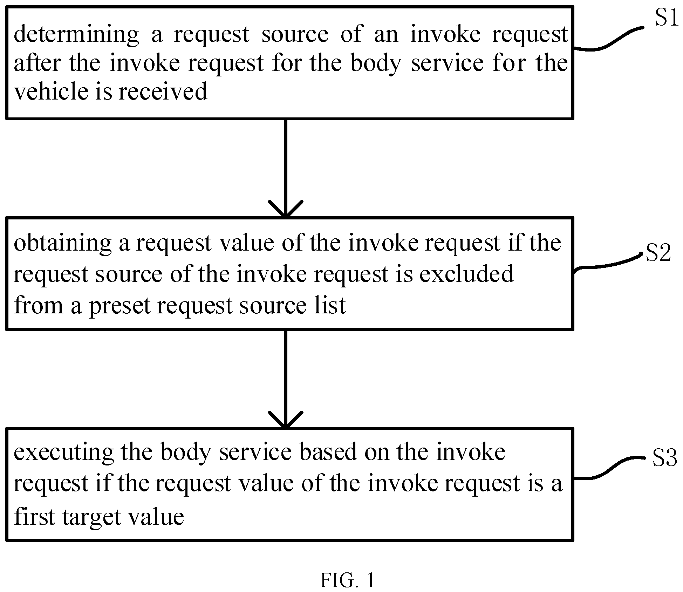

As shown in FIG. 1, a method for invoking a body service for a vehicle according to some embodiments of the present disclosure may include:
Step S 1, determining a request source of an invoke request after the invoke request for a body service for a vehicle is received;
Step S2, obtaining a request value of the invoke request if the request source of the invoke request is excluded from a preset request source list; and
Step S3, executing the body service based on the invoke request if the request value of the invoke request is a first target value.

In step S 1, the body service may be any one of a low beam light service, a high beam light service, a position light service, a brake light service, a wiper service, a door lock service and an electric tailgate service.

In step S2, a request source included in the preset request source list belongs to a request source trusted by the vehicle, and generally refers to a request source that has been granted an authority to invoke the body service before a third-party development platform is given access to the vehicle after mass production of the vehicle. The invoke request for the body service sent by the request source within the preset request source list may be considered as a request generated by a vehicle owner actively operating the vehicle. An active operation by the vehicle owner has the highest priority, thus whether it will affect the safety of the vehicle is not considered. Upon the request source within the preset request source list sends the invoke request for the body service, the vehicle will immediately execute the body service. If the request source of the invoke request is excluded from the preset request source list, it represents that the request source is a third-party application software, thus it is necessary to consider whether the safety of the vehicle will be affected after the body service is executed.

If the body service is the low beam light service, the request source within the preset request source list may include a manual switch for a low beam light, an automatic switch for a sun and rainfall sensor, etc.. If the body service is the high beam light service, the request source within the preset request source list may include a manual switch for a high beam light etc.. If the body service is the position light service, the request source within the preset request source list may include a manual switch for a position light etc.. If the body service is the brake light service, the request source within the preset request source list may include an automatic braking of a chassis, a switch for a brake pedal, a braking of a power energy recovery etc.. If the body service is the wiper service, the request source within the preset request source list may include a switch for a wiper lever, the automatic switch for the sun and rainfall sensor, etc.. If the body service is the door lock service, the request source within the preset request source list may include a switch for a central control door lock, a switch for a door lock of each vehicle door, etc.. If the body service is the electric tailgate service, the request source within the preset request source list may include a touching switch on the automobile screen, a mechanical switch on a tailgate, a mechanical switch under a main steering wheel, a Bluetooth key switch, a remote switch of a mobile phone, etc..

The request value of the invoke request represents a specific action of a device corresponding to the body service after the body service is executed based on the invoke request. For example, the device corresponding to the low beam light service is a low beam light; the device corresponding to the high beam light service is a high beam light; the device corresponding to the position light service is a position light; the device corresponding to the brake light service is a brake light; the device corresponding to the wiper service is a wiper; the device corresponding to the door lock service is a door lock; and the device corresponding to the electric tailgate service is an electric tailgate. For example, it can be defined that: when the request value of the invoke request is set to 1, it represents that the specific action of the device corresponding to the body service is being on after the body service is executed based on the invoke request; when the request value of the invoke request is 0, it represents that the specific action of the device corresponding to the body service is being off after the body service is executed based on the invoke request.

In step S3, if the request value of the invoke request is the first target value, it represents that the safety of the vehicle will not be affected after the third-party application software invokes the body service; if the request value of the invoke request is the second target value, it represents that the safety of the vehicle may be affected after the third-party application software invokes the body service. Therefore, in order to prevent the safety of the vehicle from being affected by the third-party application invoking the body service, the execution of the body service may be considered to be prohibited if the request value of the invoke request is the second target value.

If the body service is the low beam light service, it is understood that: the safety of the vehicle will not be affected by turning on the low beam light in any scenario; and the safety of the vehicle will be affected by turning off the low beam light in certain scenarios. For example, a visual field of a driver will be seriously affected by turning off the low beam light at night, thereby the safety of the vehicle is affected. Therefore, the first target value corresponding to the low beam light service may be 1, and the second target value corresponding to the low beam light service may be 0. If the body service is the high beam light service, it is understood that: the visual field of oncoming vehicles will be affected by turning on the high beam light, thus it is considered that the safety of the vehicle may be affected due to the presence of a safety risk; the visual field of oncoming vehicles will not be affected by turning off the high beam light, and although the visual field and a visual distance of the driver of the present vehicle will be affected, an controllability of the driver is very high, thus it is considered that there is no safety risk and the safety of the vehicle will not be affected. Therefore, the first target value corresponding to the high beam light service may be 0, and the second target value corresponding to the high beam light service may be 1. If the body service is the wiper service, it is understood that: the safety of the vehicle will not be affected by turning on the wiper in any scenario; the safety of the vehicle will be affected by turning off the wiper when it is raining or when there are foreign objects on a wind shield; therefore, the first target value corresponding to the wiper service may be 1, and the second target value corresponding to the wiper service may be 0. If the body service is the door lock service, it is understood that: the vehicle door may be caused to suddenly open by unlocking the door lock while the vehicle is driving, thus there is a safety risk and the safety of the vehicle is affected; locking the door lock will not affect the safety of the vehicle; therefore, the first target value the door lock service may be 0, and the second target value the door lock service may be 1. By analogy, it can be set that: the first target value corresponding to the position light service may be 1, and the second target value corresponding to the position light service may be 0; the first target value corresponding to the brake light service may be 1, and the second target value corresponding to the brake light service may be 0; and the first target value corresponding to the electric tailgate service may be 0, and the second target value corresponding to the electric tailgate service may be 1.

It can be seen from the above that, a method for invoking a body service for a vehicle according to some embodiments of the present disclosure determines the request source of the invoke request after the invoke request for the body service for the vehicle is received. If the request source of the invoke request is excluded from the preset request source list, it represents that the invoke request comes from the third-party application software, thus it is necessary to consider whether the safety of the vehicle will be affected by executing the body service; and then the request value of the invoke request is obtained. If the request value of the invoke request is the first target value, it represents that the safety of the vehicle will not be affected after the third-party application software invokes the body service, thus the body service can be executed. In this way, the third-party application software may be allowed to invoke the body service on the premise of ensuring the safety of the vehicle, thereby the application scenarios for the body service for the vehicle are broadened.

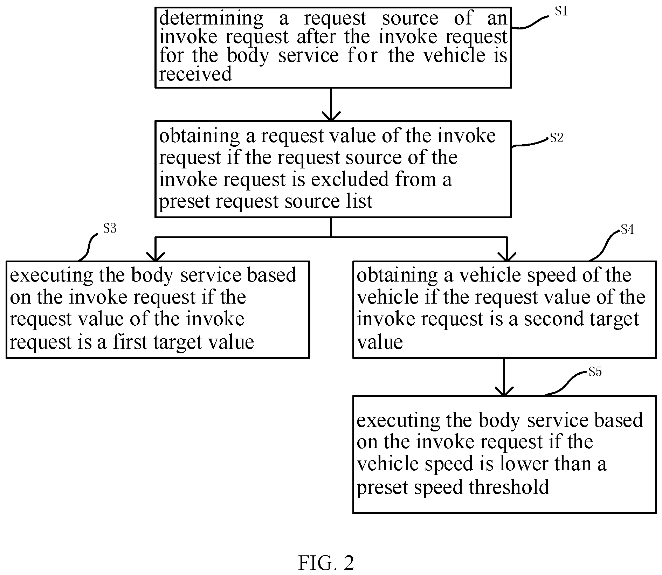

As mentioned above, if the request value of the invoke request is the second target value, the execution of the body service can be considered to be prohibited, and the third-party application is prohibited from invoking the body service on the condition that the safety of the vehicle may be affected after the body service is invoked by the third-party application software. In this way, the third-party application software can be completely prevented from invoking the body service and affecting the safety of the vehicle, however the application scenarios of the body service are still limited. For this reason, as shown in FIG 2, in some embodiments, after step S2, the method for invoking the body service for the vehicle may also include: step S4, obtaining a vehicle speed of the vehicle if the request value of the invoke request is the second target value; and step S5, executing the body service based on the invoke request if the vehicle speed is lower than a preset speed threshold. In some implementations, a value range of the preset speed threshold may be 0 km/h-30 km/h, for example 5 km/h.

It is understood that when the vehicle speed is low, allowing third-party applications to invoke the body services is in a low possibility to cause danger to the vehicle, thus the safety of the vehicle can be considered substantially not to be affected. The application scenarios for the body service for the vehicle may be further expanded by allowing the body services to be invoked by the third-party applications when the vehicle speed is low. However, in some scenarios, the safety of the vehicle will still be affected by allowing the third-party application to invoke the body service when the request value of the invoke request is the second target value and the vehicle speed is low. For example, when the vehicle speed is low in rainstorm weather and the request value of the invoke request for the wiper service is 0, the visual field of the vehicle owner will be reduced by turning off the wiper, which will affect the driving safety. For example, when the vehicle speed of the vehicle on an unlit lane at night is low, and the request value of the invoke request for the low beam light service is 0, the vehicle owner will be caused to lose the visual field by turning off the low beam light, thus the driving safety will be affected. Therefore, when the vehicle speed is low, the third-party applications are allowed to invoke the wiper service or the low beam light service. Although the application scenarios of the vehicle wiper service and the low beam light service are further broadened, the safety of the vehicle is sacrificed to a certain extent. Therefore, when the body service is the wiper service or the low beam light service, and if the request value of the invoke request is the second target value, the body service should be prohibited.

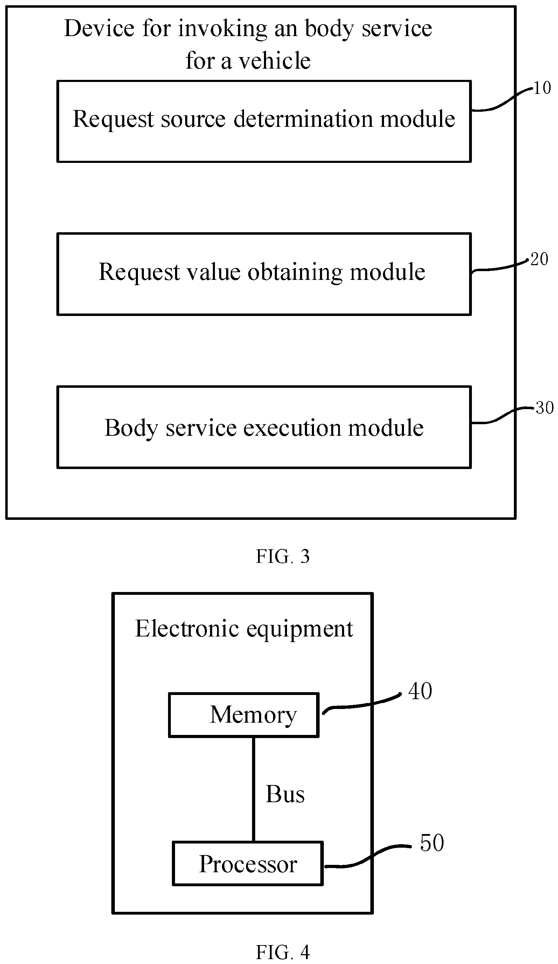

As shown in FIG. 3, a device for invoking a body service for a vehicle according to some embodiments of the present disclosure may include:
a request source determination module 10, configured to determine a request source of an invoke request after the invoke request for the body service for the vehicle is received;
a request value obtaining module 20, configured to obtain a request value of the invoke request if the request source of the invoke request is excluded from a preset request source list; and
a body service execution module 30, configured to execute the body service based on the invoke request if the request value of the invoke request is a first target value.

In some embodiments, the body service may be any one of a low beam light service, a high beam light service, a position light service, a brake light service, a wiper service, a door lock service and an electric tailgate service.

In some embodiments, a request source included in a preset request source list belongs to a request source trusted by the vehicle, and generally refers to a request source that has been granted an authority to invoke the body service before a third-party development platform is given access to the vehicle after mass production of the vehicle. The invoke request for the body service sent by the request source within the preset request source list may be considered as a request generated by a vehicle owner actively operating the vehicle. An active operation by the vehicle owner has the highest priority, thus whether it will affect the safety of the vehicle is not considered. Upon the request source within the preset request source list sends the invoke request for the body service, the vehicle will immediately execute the body service. If the request source of the invoke request is excluded from the preset request source list, it represents that the request source is a third-party application software, thus it is necessary to consider whether the safety of the vehicle will be affected after the body service is executed.

If the body service is the low beam light service, the request source within the preset request source list may include a manual switch for a low beam light, an automatic switch for a sun and rainfall sensor, etc.. If the body service is the high beam light service, the request source within the preset request source list may include a manual switch for a high beam light etc.. If the body service is the position light service, the request source within the preset request source list may include a manual switch for a position light etc.. If the body service is the brake light service, the request source within the preset request source list may include an automatic braking of a chassis, a switch for a brake pedal, a braking of a power energy recovery etc.. If the body service is the wiper service, the request source within the preset request source list may include a switch for a wiper lever, the automatic switch for the sun and rainfall sensor, etc.. If the body service is the door lock service, the request source within the preset request source list may include a switch for a central control door lock, a switch for a door lock of each vehicle door, etc.. If the body service is the electric tailgate service, the request source within the preset request source list may include a touching switch on the automobile screen, a mechanical switch on a tailgate, a mechanical switch under a main steering wheel, a Bluetooth key switch, a remote switch of a mobile phone, etc.

The request value of the invoke request represents a specific action of a device corresponding to the body service after the body service is executed based on the invoke request. For example; the device corresponding to the low beam light service is a low beam light; the device corresponding to the high beam light service is a high beam light; the device corresponding to the position light service is a position light; the device corresponding to the brake light service is a brake light; the device corresponding to the wiper service is a wiper; the device corresponding to the door lock service is a door lock; and the device corresponding to the electric tailgate service is an electric tailgate. For example, it can be defined that: when the request value of the invoke request is set to 1, it represents that the specific action of the device corresponding to the body service is being on after the body service is executed based on the invoke request; when the request value of the invoke request is 0, it represents that the specific action of the device corresponding to the body service is being off after the body service is executed based on the invoke request.

In some embodiments, if the request value of the invoke request is the first target value, it represents that the safety of the vehicle will not be affected after the third-party application software invokes the body service; if the request value of the invoke request is the second target value, it represents that the safety of the vehicle may be affected after the third-party application software invokes the body service. Therefore, in order to prevent the safety of the vehicle from being affected by the third-party application invoking the body service, the execution of the body service may be considered to be prohibited if the request value of the invoke request is the second target value.

If the body service is the low beam light service, it is understood that: the safety of the vehicle will not be affected by turning on the low beam light in any scenario; and the safety of the vehicle will be affected by turning off the low beam light in certain scenario. For example, a visual field of a driver will be seriously affected by turning off the low beam light at night, thereby the safety of the vehicle is affected. Therefore, the first target value corresponding to the low beam light service may be 1, and the second target value corresponding to the low beam light service may be 0. If the body service is the high beam light service, it is understood that: the visual field of oncoming vehicles will be affected by turning on the high beam light, thus it is considered that the safety of the vehicle may be affected due to the presence of a safety risk; the visual field of oncoming vehicles will not be affected by turning off the high beam light, and although the visual field and a visual distance of the driver of the present vehicle will be affected, an controllability of the driver is very high, thus it is considered that there is no safety risk and the safety of the vehicle will not be affected. Therefore, the first target value corresponding to the high beam light service may be 0, and the second target value corresponding to the high beam light service may be 1. If the body service is the wiper service, it is understood that: the safety of the vehicle will not be affected by turning on the wiper in any scenario; the safety of the vehicle will be affected by turning off the wiper when it is raining or when there are foreign objects on a wind shield; therefore, the first target value corresponding to the wiper service may be 1, and the second target value corresponding to the wiper service may be 0. If the body service is the door lock service, it is understood that: the vehicle door may be caused to suddenly open by unlocking the door lock while the vehicle is driving, thus there is a safety risk and the safety of the vehicle is affected; locking the door lock will not affect the safety of the vehicle; therefore, the first target value the door lock service may be 0, and the second target value the door lock service may be 1. By analogy, it can be set that: the first target value corresponding to the position light service may be 1, and the second target value corresponding to the position light service may be 0; the first target value corresponding to the brake light service may be 1, and the second target value corresponding to the brake light service may be 0; and the first target value corresponding to the electric tailgate service may be 0, and the second target value corresponding to the electric tailgate service may be 1.

It can be seen from the above that, a device for invoking the body service for the vehicle according to some embodiments of the present disclosure determines the request source of the invoke request after the invoke request for the body service for the vehicle is received. If the request source of the invoke request is excluded from the preset request source list, it represents that the invoke request comes from the third-party application software, thus it is necessary to consider whether the safety of the vehicle will be affected by executing the body service; and then the request value of the invoke request is obtained. If the request value of the invoke request is the first target value, it represents that the safety of the vehicle will not be affected after the third-party application software invokes the body service, thus the body service can be executed. In this way, the third-party application software may be allowed to invoke the body service on the premise of ensuring the safety of the vehicle, thereby the application scenarios of the body service for the vehicle are broadened.

As mentioned above, if the request value of the invoke request is the second target value, the execution of the body service can be considered to be prohibited, and the third-party application is prohibited from invoking the body service on the condition that the safety of the vehicle may be affected after the body service is invoked by the third-party application software. In this way, the third-party application software can be completely prevented from invoking the body service and affecting the safety of the vehicle, however the application scenarios of the body service are still limited. For this, in some embodiments, after the request value obtaining module 20 is configured to obtain the request value of the invoke request if the request source of the invoke request is excluded from the preset request source list, the body service execution module 30 may also be configured to: obtain the vehicle speed of the vehicle if the request value of the invoke request is the second target value; and execute the body service based on the invoke request if the vehicle speed is lower than a preset speed threshold. In some implementations, a value range of the preset speed threshold may be 0 km/h-30 km/h, for example 5 km/h.

It is understood that when the vehicle speed is low, allowing the third-party applications to invoke the body services is in a low possibility to cause danger to the vehicle, thus the safety of the vehicle can be considered substantially not to be affected. The application scenarios for the body service for the vehicle may be further expanded by allowing the body services to be invoked by the third-party applications when the vehicle speed is low. However, in some scenarios, the safety of the vehicle will still be affected by allowing the third-party application to invoke the body service when the request value of the invoke request is the second target value and the vehicle speed is low. For example, when the vehicle speed is low in rainstorm weather and the request value of the invoke request for the wiper service is 0, the visual field of the vehicle owner will be reduced by turning off the wiper, which will affect the driving safety. For example, when the vehicle speed of the vehicle on an unlit lane at night is low, and the request value of the invoke request for the low beam light service is 0, the vehicle owner will be caused to lose the visual field by turning off the low beam light, thus the driving safety will be affected. Therefore, when the vehicle speed is low, the third-party applications are allowed to invoke the wiper service or the low beam light service. Although the application scenarios of the vehicle wiper service and the low beam light service are further broadened, the safety of the vehicle is sacrificed to a certain extent. Therefore, when the body service is the wiper service or the low beam light service, and if the request value of the invoke request is the second target value, the body service should be prohibited.

As shown in FIG. 4, an electronic equipment according to some embodiments of the present disclosure may include a memory 40, a processor 50, and a computer program stored in the memory 40 and runnable on the processor 50. The processor 50, when executing the computer program, implements the steps of any one of the methods for invoking the body service for the vehicle described above. An electronic equipment for invoking a body service for a vehicle according to some embodiments of the present disclosure determines the request source of the invoke request after the invoke request for the body service for the vehicle is received. If the request source of the invoke request is excluded from the preset request source list, it represents that the invoke request comes from a third-party application software, thus it is necessary to consider whether the safety of the vehicle will be affected by executing the body service; and then the request value of the invoke request is obtained. If the request value of the invoke request is the first target value, it represents that the safety of the vehicle will not be affected after the third-party application software invokes the body service, thus the body service is executed. In this way, the third-party application software can be allowed to invoke the body service on the premise of ensuring the safety of the vehicle, thereby application scenarios for the body service for the vehicle are broadened.

In some embodiments, a bus architecture (represented by a bus), may include any number of interconnected buses and bridges, and the bus links together various circuits including one or more processors represented by processors and storages represented by memory. The bus may also link together various other circuits such as peripherals, voltage regulators, and power management circuits, all of which are well known in the art and therefore will not be further described herein. An interface of the bus provides an interface among the bus and a receiver and a transmitter. The receiver and transmitter may be the same element, that is, a transceiver, providing units for communicating with various other devices over a transmission medium. The processor is responsible for managing the bus and general processing, while the memory may be configured to store data used by the processor when performing operations.

Since the electronic equipment introduced in this embodiment is the electronic equipment used to implement the method for invoking a body service for a vehicle in the embodiments of the present disclosure, those skilled in the art can understand the specific implementations of the electronic equipment in this embodiment and various variations thereof based on the method for invoking the body service for the vehicle introduced in the embodiments of the present disclosure. Thus, how the electronic equipment implements the method in the embodiments of the present disclosure will not be described in detail here. As long as those skilled in the art implement the electronic equipment used in the method for invoking the body service for the vehicle in the embodiments of the present disclosure, the electronic equipment all shall fall within the scope of protection intended by the present disclosure.

A computer-readable storage medium is provided according to some embodiments of the present disclosure, The computer-readable storage medium is stored with a computer program, and the computer program, when executed by the processor 50, implements any one of the above-mentioned methods for invoking a body service for a vehicle. The computer program according to some embodiments of the present disclosure, when executed by the processor 50, determines the request source of the invoke request after the invoke request for a body service for a vehicle is received. If the request source of the invoke request is excluded from the preset request source list, it represents that the invoke request comes from a third-party application software, thus it is necessary to consider whether the safety of the vehicle will be affected by executing the body service; and then the request value of the invoke request is obtained. If the request value of the invoke request is the first target value, it represents that the safety of the vehicle will not be affected after the third-party application software invokes the body service, thus the body service will be executed. In this way, the third-party application software is allowed to invoke the body service on the premise of ensuring the safety of the vehicle, and application scenarios for the body service for the vehicle are broadened.

Those skilled in the art should understand that the embodiments of the present disclosure may be provided as methods, systems, or computer program products. Accordingly, the present disclosure can take the form of an entire hardware embodiment, an entire software embodiment, or an embodiment combining software and hardware aspects. Furthermore, the present disclosure may take the form of a computer program product embodied on one or more computer-usable storage media (including but not limited to disk storage, CD- ROM, optical storage, etc.) having computer-usable program code embodied therein.

The present disclosure is described with reference to a flowchart and/or block diagram of methods, equipments (systems), and computer program products according to embodiments of the present disclosure. It should be understood that each procedure and/or block in the flowchart and/or block diagram, and a combination of procedures and/or blocks in the flowchart and/or block diagram can be realized by computer program instructions. These computer program instructions may be provided to a general-purpose computer, special-purpose computer, embedded processor, or processor of other programmable data processing device to produce a machine, such that the instructions, executed by the processor of the computer or other programmable data processing device, produce a device for realizing the functions specified in one or more procedures of the flowchart and/or one or more blocks of the block diagram.

These computer program instructions may also be stored in a computer-readable memory capable of directing a computer or other programmable data processing device to operate in a specific manner, such that the instructions stored in the computer-readable memory may produce an article of manufacture including an instruction device. The instruction device realizes the function specified in one or more procedures of the flowchart and/or one or more blocks of the block diagram.

These computer program instructions can also be loaded onto a computer or other programmable data processing device, so as to cause a series of operational steps to be performed on the computer or other programmable device to produce a computer-implemented process, thereby the instructions, executed on a computer or other programmable device, provide steps for implementing the function specified in one or more procedures of the flowchart and/or one or more blocks of the block diagram.

Although preferred embodiments of the present disclosure have been described, additional changes and modifications can be made to these embodiments by those skilled in the art once the basic inventive concept is appreciated. Therefore, it is intended that the appended claims be construed to cover the preferred embodiments and all changes and modifications which fall within the scope of the present disclosure.

It is obvious that those skilled in art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A method for invoking a body service for a vehicle, **characterized by** comprising:
determining a request source of an invoke request after the invoke request for the body service for the vehicle is received;
obtaining a request value of the invoke request if the request source of the invoke request is excluded from a preset request source list; and
executing the body service based on the invoke request if the request value of the invoke request is a first target value.

2. The method for invoking the body service for the vehicle according to claim 1, wherein, after the obtaining a request value of the invoke request if the request source of the invoke request is excluded from a preset request source list, the method further comprises:
obtaining a vehicle speed of the vehicle if the request value of the invoke request is a second target value; and
executing the body service based on the invoke request if the vehicle speed is lower than a preset speed threshold.

3. The method for invoking the body service for the vehicle according to claim 2, wherein a value range of the preset speed threshold is between 0 km/h and 30 km/h.

4. The method for invoking the body service for the vehicle according to claim 1, wherein the body service is any one of a low beam light service, a high beam light service, a position light service, a brake light service, a wiper service, a door lock service and an electric tailgate service.

5. A device for invoking a body service for a vehicle, **characterized by** comprising:
a request source determination module, configured to determine a request source of an invoke request after the invoke request for the body service for the vehicle is received;
a request value obtaining module, configured to obtain a request value of the invoke request if the request source of the invoke request is excluded from a preset request source list; and
a body service execution module, configured to execute the body service based on the invoke request if the request value of the invoke request is a first target value.

6. The device for invoking the body service for the vehicle according to claim 5, wherein after the request value obtaining module is configured to obtain the request value of the invoke request if the request source of the invoke request is excluded from the preset request source list, the body service execution module is further configured to:
obtain a vehicle speed of a vehicle if the request value of the invoke request is a second target value; and execute the body service based on the invoke request if the vehicle speed is lower than a preset speed threshold;

7. The device for invoking the body service for the vehicle according to claim 6, wherein a value range of the preset speed threshold is between 0 km/h-30 km/h.

8. The device for invoking the body service for the vehicle according to claim 1, wherein the body service is any one of a low beam light service, a high beam light service, a position light service, a brake light service, a wiper service, a door lock service and an electric tailgate service.

9. An electronic equipment, **characterized by** comprising a memory, a processor, and a computer program stored in the memory and operable on the processor, wherein the processor, when executing the computer program, implements the method for invoking a body service for a vehicle according to any one of the claims 1-4.

10. A computer-readable storage medium, **characterized in that**, the computer-readable storage medium is stored with a computer program, which implements, when executed by a processor, a method for invoking a body service for a vehicle according to any one of the claims 1-4.
